# EUROPÄISCHE PATENTSCHRIFT

(11) **EP 2 247 492 B1**
(45) Veröffentlichungstag und Bekanntmachung des Hinweises auf die Patenterteilung: **25.04.2012**
(21) Anmeldenummer: 09703428.4
(22) Anmeldetag: 22.01.2009
(51) Int. Cl.: B62D 53/08, B62D 29/00

(54) **FAHRZEUGKUPPLUNG**
VEHICLE CLUTCH
SYSTÈME D'ATTELAGE

(30) Priorität: 26.01.2008 DE 102008006204
(43) Veröffentlichungstag der Anmeldung: 10.11.2010
(73) Patentinhaber: Jost-Werke GmbH, 63263 Neu-Isenburg (DE)
(72) Erfinder: ALGÜERA GALLEGO, José Manuel, 63739 Aschaffenburg (DE); POLTE, Jens, Greenville, TN 37745 (US)
(74) Vertreter: Fuchs
(86) Internationale Anmeldenummer: PCT/EP2009/050702
(87) Internationale Veröffentlichungsnummer: WO 2009/092756

(56) Entgegenhaltungen:
- DE-A1- 19 814 275
- US-A- 5 622 767
- US-A- 6 058 673

## Beschreibung

Die Erfindung betrifft eine Fahrzeugkupplung umfassend einen Kupplungskörper und mindestens ein daran angeordnetes Strukturelement sowie ein Verfahren zum Herstellen einer Fahrzeugkupplung.

Der Kupplungskörper und die damit zusammenwirkenden Bauteile werden üblicherweise gießtechnisch aus Stahl- oder Sphäroguss hergestellt oder auch aus Blechteilen geschweißt. Die daraus resultierende robuste Bauweise ist bei den hohen zu erwartenden Betriebskräften notwendig, um Verformungen zu vermeiden und einen maximalen Verschleißschutz zu gewährleisten. Diese bisher angewandten Bauweisen sind jedoch insofern nachteilig, als dass die Bauteilgewichte und der Aufwand für die Bearbeitung insbesondere für das Durchführen der Schweißarbeiten an Blechteilen hoch sind.

Die gattungsbildente DE 198 14 275 A1 offenbart eine nicht näher beschriebene Kupplungsplatte aus Stahl, auf deren Oberseite mindestens ein Gleitbelag mittels Schrauben, durch Verkleben und/oder durch formschlüssige Verbindungselemente befestigt ist. Der Gleitbelag soll aus mindestens zwei miteinander in Wirkverbindung stehenden hinreichend starken Kunststoffschichten bestehen, von denen das Material der die Auflagefläche bildenden ersten Schicht einen höheren thermischen Ausdehnungskoeffizienten und das Material der zweiten, der Sattelkupplung zugewandten Schicht einen geringeren thermischen Ausdehnungskoeffizienten als das Material der ersten Schicht aufweisen soll. Hinsichtlich der konstruktiven Ausgestaltung der Kupplungsplatte sind der bekannten Druckschrift keine Hinweise zu entnehmen.

Demzufolge lag der Erfindung die Aufgabe zugrunde, eine Fahrzeugkupplung bereitzustellen, die zur Reduzierung von Gewicht und Kosten in einzelnen Bereichen auf die zu erwartende mechanische Beanspruchung optimal dimensioniert ist.

Eine weitere Teilaufgabe bestand darin, ein entsprechendes Herstellungsverfahren für Fahrzeugkupplungen zu entwickeln.

Die Aufgabe wird erfindungsgemäß mit einer Fahrzeugkupplung gelöst, bei der das Strukturelement durch eine Kunststoffmasse kraftschlüssig mit dem Kupplungskörper verbunden ist. Die daraus entstehende Verbundkupplung weist den Vorteil auf, dass die Herstellungskosten aufgrund des geringeren Aufwandes für das Fügen der Einzelteile massiv gesenkt werden. Darüber hinaus sind an der erfindungsgemäßen Fahrzeugkupplung komplexe Geometrien darstellbar, die sonst nur mit erheblichem Zusatzaufwand realisiert werden können. Hierzu gehört zum Beispiel das Anbringen von Halterungen zur Befestigung von Zusatzaggregaten an der Fahrzeugkupplung.

Ein weiterer Vorteil der erfindungsgemäßen Fahrzeugkupplung liegt in der Möglichkeit, in mechanisch schwach belasteten Bereichen mit dünneren Blechen und Wandstärken arbeiten zu können als bei der klassischen Bauweise. Auch wenn nur geringe Belastungen zu erwarten sind, werden bei den bekannten Herstellungsverfahren für das Schweißen oder aus gusstechnischen Gründen gewisse Mindestwandstärken benötigt.

Die erfindungsgemäße Fahrzeugkupplung hat darüber hinaus Vorteile bei starken dynamischen Beanspruchungen insbesondere gegenüber Schweißkonstruktionen, bei denen die Schweißnähte eine Schwachstelle bilden.

Vorzugsweise umfasst der Kupplungskörper eine Kupplungsplatte einer Sattelkupplung. Alternativ hierzu kann der Kupplungskörper auch aus einem Kupplungsmaul einer Anhänger- oder Bolzenkupplung gebildet sein.

Es hat sich als günstig herausgestellt, wenn die Kupplungsplatte oder das Kupplungsmaul aus Metall gefertigt ist. Insbesondere die Oberseite der Kupplungsplatte einer Sattelkupplung sollte eine metallische Oberseite aufweisen. Dieses ist sowohl wegen der hohen mechanischen Beanspruchung der Oberseite als auch der optischen Anmutung vorteilhaft.

Das Strukturelement kann vorzugsweise aus mindestens einer Verstärkungsrippe und/oder Halterung und/oder Lagerstelle gebildet sein. Unter einer Verstärkungsrippe wird eine im Einbauzustand der Sattelkupplung unterhalb der Kupplungsplatte befindliche Wand oder Versteifungsstruktur zur Erhöhung der Biegefestigkeit verstanden. Halterungen an einer Fahrzeugkupplung können beispielsweise Gewindeeinsatzteile sein. Die Lagerstellen sind an einer Sattelkupplung an gegenüberliegenden seitlichen Positionen zum Abstützen der Kupplungsplatte an darunter befindlichen Lagerböcken angeordnet. Insbesondere Verstärkungsrippen und Lagerstellen liegen im Kraftfluss der Betriebskräfte.

Zweckmäßigerweise sind mehrere Strukturelemente an der Fahrzeugkupplung vorhanden, die durch eine Kunststoffmasse auch untereinander kraftschlüssig verbunden sind. Dadurch lässt sich eine stabilisierende Fachwerkstruktur erzielen.

Gemäß einer besonders vorteilhaften Ausführungsform ist das Strukturelement aus Metall und/oder aus Kohlefaser und/oder aus Glasfaser gefertigt. Die erfindungsgemäße Fahrzeugkupplung ermöglicht unter Berücksichtigung der in dem jeweiligen Bereich zu erwartenden Beanspruchung die Verwendung unterschiedlicher Materialien der im Kraftfluss liegenden Strukturelemente. Durch die Verwendung von Kohlefaser- und/oder Glasfaserelementen lassen sich besonders starke Reduzierungen des Gewichts der Fahrzeugkupplung erreichen.

Besonders hohe Festigkeiten insbesondere des Strukturelementes lassen sich mit so genannten Metallschäumen erreichen. Der Metallschaum wird aus einem Treibmittel und einem diesem zugesetzten Metallpulver hergestellt, wobei das Metallpulver meist aus Aluminium oder Stahl besteht. Nach dem Zusammenführen und Mischen des Treibmittels mit dem Metallpulver folgen ein erster Formgebungsprozess und ein anschließendes Aufschäumen. Durch die Schaumstruktur ergibt sich eine äußerst geringe Volumendichte bei nur geringfügig verringerter Festigkeit des Metallschaums.

Günstigerweise kontaktiert das Strukturelement mit mindestens einer Seite die Kunststoffmasse. Dieses wird beispielsweise dadurch erreicht, dass das Strukturelement ganz oder teilweise in die Kunststoffmasse eingegossen oder von dieser umschäumt ist. Ein teilweise eingegossenes oder eingeschäumtes Strukturelement ist als solches mit mindestens einer Seite auch in eingebautem Zustand sichtbar. Dieses hat den Vorteil, dass eine bearbeitbare und widerstandsfähige Oberfläche des Strukturelementes zur Verfügung steht. Hierdurch gibt sicht insbesondere im Bereich der Verstärkungsrippen ein sandwichartiger Aufbau aus Kupplungselement, Kunststoffmasse und Strukturelement. Ein vollständig in die Kunststoffmasse eingegossenes oder eingeschäumtes Strukturelement ist von außen nicht zugänglich und bietet einen besonders effektiven Korrosionsschutz.

Neben dem Strukturelement kann auch die Fahrzeugkupplung vollständig von der Kunststoffmasse umschlossen sein. Sofern die Fahrzeugkupplung eine Sattelkupplung ist, ergibt sich die Möglichkeit, eine Kupplungsplatte herzustellen, die zum Beispiel an den Kontaktstellen zum Auflieger oder zu den Lagerböcken mit weniger oder gar keinem Schiermittel auskommt.

Eine besonders hohe Festigkeit lässt sich erzielen, wenn die Kunststoffmasse faserverstärkt ist.

Als Materialien für die Kunststoffmasse eignen sich Thermoplaste oder Duroplaste. Ein thermoplastischer Kunststoff verformt sich bei Wärme und behält beim Erkalten seine Form bei. Die bekanntesten Thermoplaste sind Polypropylen, Polyethylen, Polyester, Polyvinylchlorid und Polyamid. Duroplaste, auch Duromere genannt, sind Kunststoffe, die nach ihrer Aushärtung nicht mehr verformt werden können. Duroplaste sind harte, glasartige Polymerwerkstoffe, die über chemische Hauptvalenzbindungen dreidimensional fest vernetzt sind. Die Vernetzung erfolgt beim Mischen von Vorprodukten mit Verzweigungsstellen und wird entweder bei Raumtemperatur mit Hilfe von Katalysatoren chemisch oder bei hohen Temperaturen thermisch aktiviert.

Als Kunststoffmasse kann insbesondere ein Kunststoffschaum verwendet werden. Als Kunststoffmasse ist auch die Verwendung eines Metallschaumes besonders gut geeignet. Da das Treibmittel des Metallschaumes einen Kunststoff umfasst, wird der Metallschaum im weiteren Sinne auch als Kunststoffmasse verstanden.

Die Aufgabe wird auch durch ein Herstellungsverfahren gelöst, bei dem das Strukturelement entsprechend seiner späteren Anordnung an dem Kupplungskörper ausgerichtet und mit einer Kunststoffmasse kraftschlüssig mit diesem verbunden wird. Hierbei hat es sich als zweckmäßig erwiesen, den Kupplungskörper und das Strukturelement in ein Formwerkzeug zu legen. Nach dem Aushärten der Kunststoffmasse kann die aus Kupplungskörper und Strukturelement gebildete Fahrzeugkupplung dem Formwerkzeug entnommen werden.

Vorteilhafterweise umfasst der Kupplungskörper eine Kupplungsplatte, auf welche die Strukturelemente aufgelegt werden.

Vorzugsweise wird die Kupplungsplatte erfindungsgemäß auf ihre im Einbauzustand als Oberseite und das mindestens eine Strukturelement auf die im Einbauzustand als Unterseite vorgesehene Seite gelegt. Bei dieser Ausrichtung lassen sich die Strukturelemente besonders komfortabel in Ihrer vorgesehenen Position fixieren.

In einem besonders günstigen Verfahrensschritt wird das Strukturelement ganz oder teilweise von der Kunststoffmasse eingegossen.

Zum besseren Verständnis wird die Erfindung nachfolgend anhand von insgesamt sieben Figuren erläutert. Es zeigen die:
- **Figur 1:**: eine Draufsicht auf einen Teil einer horizontal geschnittenen Kupplungsplatte gemäß einer ersten Ausführungsform;
- **Figur 2:**: einen Querschnitt längs der Schnittebene A-A in Figur 1;
- **Figur 3:**: einen Querschnitt längs der Schnittebene B-B in Figur 1;
- **Figur 4:**: eine Draufsicht auf einen Teil einer horizontal geschnittenen Kupplungsplatte gemäß einer zweiten Ausführungsform;
- **Figur 5**:: einen Querschnitt längs der Schnittebene A-A in Figur 4;
- **Figur 6:**: einen Querschnitt längs der Schnittebene B-B in Figur 4 und
- **Figur 7:**: einen Querschnitt durch eine Kupplungsplatte gemäß einer dritten Ausführungsform.

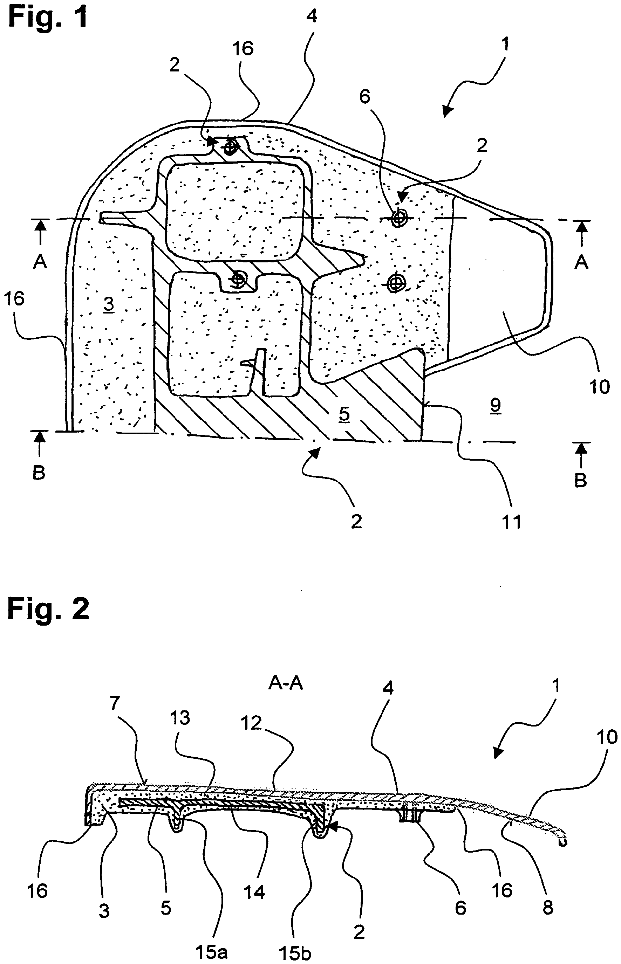

Die Figur 1 zeigt eine Draufsicht auf eine horizontal geschnittene Kupplungsplatte 4 als Kupplungskörper 1 einer Sattelkupplung gemäß einer ersten Ausführungsform. Die Kupplungsplatte 4 weist auf ihrer hinteren Seite 11 eine Einfahröffnung 9 auf, in welche ein nicht gezeigter Königszapfen eines Aufliegers in gewöhnlicher Weise in die Sattelkupplung eingefahren werden kann. Die Einfahröffnung 9 ist beidseitig durch ein Kupplungshorn 10 begrenzt, wobei in der Darstellung der Figur 1 lediglich das in Fahrtrichtung rechte Kupplungshorn 10 erkennbar ist.

Im Fahrbetrieb stützt sich die Unterseite des ebenfalls nicht gezeigten Aufliegers an dem Lagerbereich 12 (siehe Figur 2) der Kupplungsplatte 4 ab. In diesem Lagerbereich 12 werden daher erhebliche Kräfte in die Kupplungsplatte 4 eingeleitet. Um nicht die gesamte Kupplungsplatte 4 mit einer großen Materialstärke und einem entsprechend hohen Gewicht zu dimensionieren, ist auf der Unterseite 8 (siehe Figur 2) der Kupplungsplatte 4 ein Strukturelement 2 in Form einer Verstärkungsrippe 5 angeordnet.

Die Verstärkungsrippe 5 umfasst eine sich im Wesentlichen horizontal erstreckende Grundplatte 14, auf der senkrecht stehende Wandabschnitte 15a, 15b ausgebildet sind. Gemäß der in den Figuren 1 bis 3 dargestellten ersten Ausführungsform ist die Verstärkungsrippe 5 ein Schmiede- oder Metallstanzteil mit vergleichsweise scharfkantigen Übergängen zwischen der Grundplatte 14 und den Wandabschnitten 15a, 15b.

Wie besonders gut der Figur 2 entnommen werden kann, ist die Verstärkungsrippe 5 mittels einer Kunststoffmasse 3 unter die Kupplungsplatte 4 geklebt. Dabei ist die Kupplungsplatte 4 bis in ihren Randbereich 16 durchgehend mit der Kunststoffmasse 3 ausgegossen. Auch zwischen der Kupplungsplatte 4 und der Verstärkungsrippe 5 befindet sich ein flächenartiger Distanzhorizont 13 aus der Kunststoffmasse 3. Die gezeigte erste Ausführungsform weist darüber hinaus eine vollständig von der Kunststoffmasse 3 umgebende Verstärkungsrippe 5 auf.

Die Strukturelemente 2 umfassen außerdem Halterungen 6, die unterhalb der Kupplungsplatte 4 ortsfest fixiert sind. Die in Figur 2 dargestellte Halterung 6 ist ein Gewindeeinsatzteil, welches ebenfalls in die Kunststoffmasse 3 eingesetzt und teilweise von dieser umgeben ist.

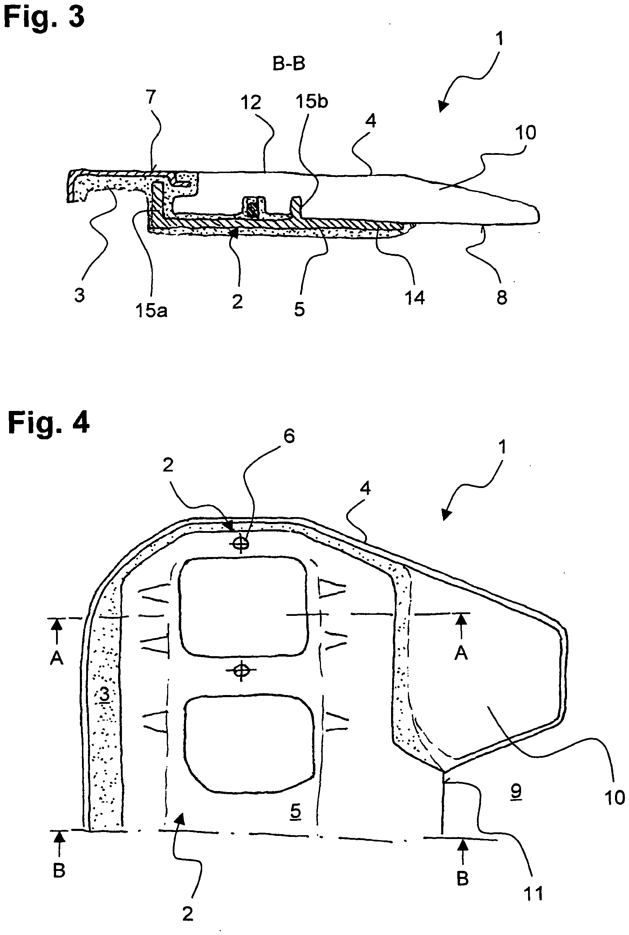

Die Figur 3 zeigt einen Querschnitt durch den Verschlussbereich der Sattelkupplung, wobei die Schnittlinie im montierten Zustand der Kupplungsplatte 4 mit der Fahrzeuglängsachse übereinstimmt. In diesem Bereich ist zwischen der Oberseite 7 der Kupplungsplatte 4 und der Verstärkungsrippe 5 ein freier Bauraum vorgesehen, welcher dem Einfahren beziehungsweise Fixieren des Königszapfens dient. Auch in diesem Bereich ist die Verstärkungsrippe 5 vollständig von der Kunststoffmasse 3 umgeben.

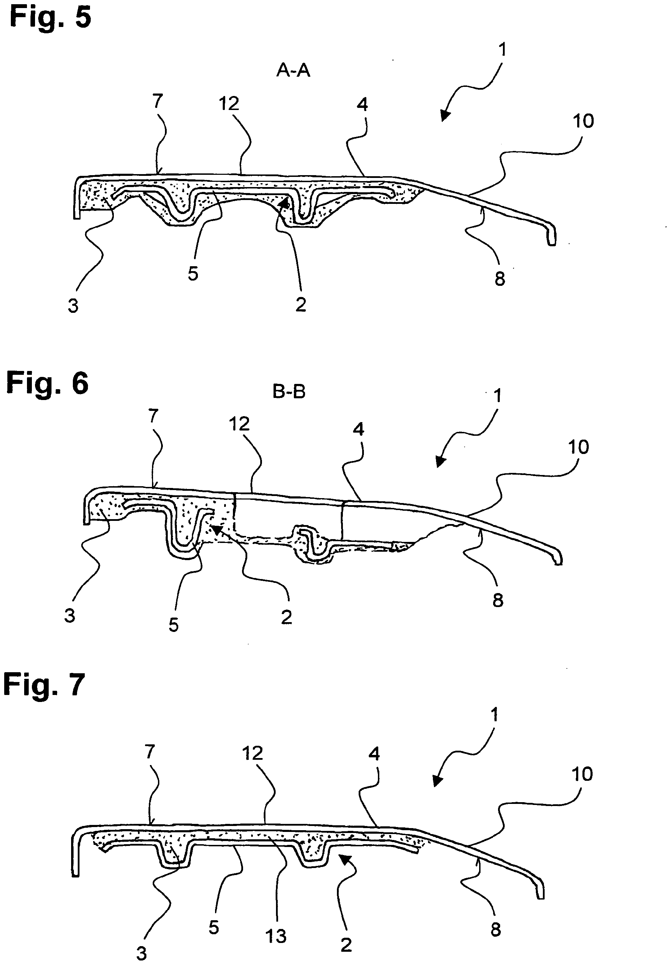

Die Figur 4 stellt eine alternative Ausführungsform der erfindungsgemäßen Fahrzeugkupplung dar, bei welcher die Verstärkungsrippe 5 als Blechpressteil hergestellt ist. Blechpressteile weisen vergleichsweise runde Biegelinien auf, wie besonders gut in den Querschnitten der Figuren 5 und 6 sichtbar ist. Auch das als Verstärkungsrippe 5 eingesetzte Blechpressteil ist vollständig in die Kunststoffmasse 3 eingeklebt.

Die Figur 7 zeigt eine dritte Ausführungsform, bei welcher die profilierte Verstärkungsrippe 5 lediglich über den Distanzhorizont 13 an die Unterseite 8 der Kupplungsplatte 4 angeklebt ist. Sofern die Verstärkungsrippe 5 aus Metall hergestellt ist, können an der Unterseite der Verstärkungsrippe 5 in weiteren Herstellungsschritten übliche Verfahren der Metallbearbeitung angewandt werden.

### Bezugszeichen

- 1: Kupplungskörper
- 2: Strukturelement
- 3: Kunststoffmasse
- 4: Kupplungsplatte
- 5: Verstärkungsrippe
- 6: Halterung
- 7: Oberseite Kupplungsplatte
- 8: Unterseite Kupplungsplatte
- 9: Einfahröffnung
- 10: Kupplungshorn
- 11: hintere Seite
- 12: Lagerbereich
- 13: Distanzhorizont
- 14: Grundplatte
- 15a,b: Wandabschnitt
- 16: Randbereich Kupplungsplatte

## Patentansprüche

1. Fahrzeugkupplung umfassend einen Kupplungskörper (1) und mindestens ein daran angeordnetes Strukturelement (2),
**dadurch gekennzeichnet,**
**dass** das Strukturelement (2) durch eine Kunststoffmasse (3) kraftschlüssig mit dem Kupplungskörper (1) verbunden ist.

2. Fahrzeugkupplung nach Anspruch 1, **dadurch gekennzeichnet, dass** der Kupplungskörper (1) eine Kupplungsplatte (4) umfasst.

3. Fahrzeugkupplung nach Anspruch 1, **dadurch gekennzeichnet, dass** der Kupplungskörper (1) ein Kupplungsmaul umfasst.

4. Fahrzeugkupplung nach Anspruch 2 oder 3, **dadurch gekennzeichnet, dass** die Kupplungsplatte (4) oder das Kupplungsmaul aus Metall gefertigt ist.

5. Fahrzeugkupplung nach einem der Ansprüche 1 bis 4, **dadurch gekennzeichnet, dass** das Strukturelement (2) aus mindestens einer Verstärkungsrippe (5) und/oder Halterung (6) und/oder Lagerstelle gebildet ist.

6. Fahrzeugkupplung nach einem der Ansprüche 1 bis 5, **dadurch gekennzeichnet, dass** mehrere Strukturelemente (2) vorhanden sind, die durch die Kunststoffmasse (3) untereinander verbunden sind.

7. Fahrzeugkupplung nach einem der Ansprüche 1 bis 6, **dadurch gekennzeichnet, dass** das Strukturelement (2) aus Metall und/oder aus Kohlefaser und/oder aus Glasfaser gefertigt ist.

8. Fahrzeugkupplung nach einem der Ansprüche 1 bis 6, **dadurch gekennzeichnet, dass** das Strukturelement (2) aus einem Metallschaum gefertigt ist.

9. Fahrzeugkupplung nach einem der Ansprüche 1 bis 8, **dadurch gekennzeichnet, dass** das Strukturelement (2) mit mindestens einer Seite die Kunststoffmasse (3) kontaktiert.

10. Fahrzeugkupplung nach einem der Ansprüche 1 bis 9, **dadurch gekennzeichnet, dass** der Kupplungskörper (1) vollständig von der Kunststoffmasse (3) umschlossen ist.

11. Fahrzeugkupplung nach einem der Ansprüche 1 bis 10, **dadurch gekennzeichnet, dass** die Kunststoffmasse (3) faserverstärkt ist.

12. Fahrzeugkupplung nach einem der Ansprüche 1 bis 11, **dadurch gekennzeichnet, dass** die Kunststoffmasse (3) ein Thermoplast oder ein Duroplast ist.

13. Fahrzeugkupplung nach einem der Ansprüche 1 bis 12, **dadurch gekennzeichnet, dass** die Kunststoffmasse (3) ein Kunststoffschaum ist.

14. Fahrzeugkupplung nach einem der Ansprüche 1 bis 12, **dadurch gekennzeichnet, dass** die Kunststoffmasse (3) ein Metallschaum ist.

15. Verfahren zum Herstellen einer Fahrzeugkupplung nach einem der Ansprüche 1 bis 14, wobei die Fahrzeugkupplung einen Kupplungskörper (1) und mindestens ein Strukturelement (2) umfasst, **dadurch gekennzeichnet, dass** das Strukturelement (2) entsprechend seiner späteren Anordnung an dem Kupplungskörper (1) ausgerichtet und mit einer Kunststoffmasse (3) kraftschlüssig mit diesem verbunden wird.

16. Verfahren nach Anspruch 15, **dadurch gekennzeichnet, dass** der Kupplungskörper (1) eine Kupplungsplatte (4) umfasst, auf welche die Strukturelemente (2) aufgelegt werden.

17. Verfahren nach Anspruch 15 oder 16, **dadurch gekennzeichnet, dass** die Kupplungsplatte (4) auf ihre im Einbauzustand als Oberseite (7) und das mindestens eine Strukturelement (2) auf die im Einbauzustand als Unterseite (8) vorgesehene Seite gelegt wird.

18. Verfahren nach einem der Ansprüche 15 bis 17, **dadurch gekennzeichnet, dass** der Kupplungskörper (1) und das mindestens eine Strukturelement (2) in ein Formwerkzeug gelegt werden.

19. Verfahren nach einem der Ansprüche 15 bis 18, **dadurch gekennzeichnet, dass** das Strukturelement (2) ganz oder teilweise von der Kunststoffmasse (3) eingegossen wird.

## Claims

1. Vehicle coupling comprising a coupling member (1) and at least one structural element (2) which is arranged thereon, **characterised in that**
the structural element (2) is connected to the coupling member (1) in a non-positive-locking manner by means of a plastics mass (3) .

2. Vehicle coupling according to claim 1, **characterised in that** the coupling member (1) comprises a coupling plate (4).

3. Vehicle coupling according to claim 1, **characterised in that** the coupling member (1) comprises a coupling jaw.

4. Vehicle coupling according to claim 2 or claim 3, **characterised in that** the coupling plate (4) or the coupling jaw is produced from metal.

5. Vehicle coupling according to any one of claims 1 to 4, **characterised in that** the structural element (2) is formed from at least one reinforcement rib (5) and/or retention member (6) and/or bearing location.

6. Vehicle coupling according to any one of claims 1 to 5, **characterised in that** there are provided a plurality of structural elements (2) which are connected to each other by means of the plastics mass (3).

7. Vehicle coupling according to any one of claims 1 to 6, **characterised in that** the structural element (2) is formed from metal and/or carbon fibre and/or glass fibre.

8. Vehicle coupling according to any one of claims 1 to 6, **characterised in that** the structural element (2) is produced from a metal foam.

9. Vehicle coupling according to any one of claims 1 to 8, **characterised in that** the structural element (2) is in contact with the plastics mass (3) with at least one side.

10. Vehicle coupling according to any one of claims 1 to 9, **characterised in that** the coupling member (1) is completely surrounded by the plastics mass (3).

11. Vehicle coupling according to any one of claims 1 to 10, **characterised in that** the plastics mass (3) is fibre-reinforced.

12. Vehicle coupling according to any one of claims 1 to 11, **characterised in that** the plastics mass (3) is a thermoplastic or a duroplastic.

13. Vehicle coupling according to any one of claims 1 to 12, **characterised in that** the plastics mass (3) is a plastics foam.

14. Vehicle coupling according to any one of claims 1 to 12, **characterised in that** the plastics mass (3) is a metal foam.

15. Method for producing a vehicle coupling according to any one of claims 1 to 14, the vehicle coupling comprising a coupling member (1) and at least one structural element (2), **characterised in that** the structural element (2) is orientated in accordance with its subsequent arrangement on the coupling member (1) and is connected thereto in a non-positive-locking manner by means of a plastics mass (3).

16. Method according to claim 15, **characterised in that** the coupling member (1) comprises a coupling plate (4) on which the structural elements (2) are positioned.

17. Method according to claim 15 or claim 16, **characterised in that** the coupling plate (4) is positioned on its side provided as the upper side (7) in the assembled state and the at least one structural element (2) is positioned on the side provided as the lower side (8) in the assembled state.

18. Method according to any one of claims 15 to 17, **characterised in that** the coupling member (1) and the at least one structural element (2) are positioned in a shaping tool.

19. Method according to any one of claims 15 to 18, **characterised in that** the structural element (2) is completely or partially cast from the plastics mass (3).

## Revendications

1. Attelage de véhicule, comprenant un corps d'attelage (1) et au moins un élément structurel (2) disposé sur ce dernier,
**caractérisé en ce que** l'élément structurel (2) est relié à force au corps d'attelage (1) par une masse (3) de matière synthétique.

2. Attelage de véhicule selon la revendication 1, **caractérisé en ce que** le corps d'attelage (1) comprend une plaque d'attelage (4).

3. Attelage de véhicule selon la revendication 1, **caractérisé en ce que** le corps d'attelage (1) comprend une bouche d'attelage.

4. Attelage de véhicule selon la revendication 2 ou 3, **caractérisé en ce que** la plaque d'attelage (4) ou la bouche d'attelage est fabriquée en métal.

5. Attelage de véhicule selon l'une des revendications 1 à 4, **caractérisé en ce que** l'élément structurel (2) est constitué d'au moins une nervure de renforcement (5) et/ou d'un support (6) et/ou d'un point d'appui.

6. Attelage de véhicule selon l'une des revendications 1 à 5, **caractérisé en ce que** plusieurs éléments structurels (2) sont présents, qui sont reliés entre eux par la masse (3) de matière synthétique.

7. Attelage de véhicule selon l'une des revendications 1 à 6, **caractérisé en ce que** l'élément structurel (2) est fabriqué en métal et/ou en fibres de carbone et/ou en fibres de verre.

8. Attelage de véhicule selon l'une des revendications 1 à 6, **caractérisé en ce que** l'élément structurel (2) est fabriqué en une mousse métallique.

9. Attelage de véhicule selon l'une des revendications 1 à 8, **caractérisé en ce que** l'élément structurel (2) est en contact par au moins un côté avec la masse (3) de matière synthétique.

10. Attelage de véhicule selon l'une des revendications 1 à 9, **caractérisé en ce que** le corps d'attelage (1) est entièrement entouré par la masse (3) de matière synthétique.

11. Attelage de véhicule selon l'une des revendications 1 à 10, **caractérisé en ce que** la masse (3) de matière synthétique est renforcée par des fibres.

12. Attelage de véhicule selon l'une des revendications 1 à 11, **caractérisé en ce que** la masse (3) de matière synthétique est une matière thermoplastique ou une matière plastique thermodurcissable.

13. Attelage de véhicule selon l'une des revendications 1 à 12, **caractérisé en ce que** la masse (3) de matière synthétique est une mousse plastique.

14. Attelage de véhicule selon l'une des revendications 1 à 12, **caractérisé en ce que** la masse (3) de matière synthétique est une mousse métallique.

15. Procédé de fabrication d'un attelage de véhicule selon l'une des revendications 1 à 14, sachant que l'attelage de véhicule comprend un corps d'attelage (1) et au moins un élément structurel (2), **caractérisé en ce que** l'élément structurel (2) est orienté conformément à sa disposition ultérieure sur le corps d'attelage (1), et est relié à ce dernier à force par une masse (3) de matière synthétique.

16. Procédé selon la revendication 15, **caractérisé en ce que** le corps d'attelage (1) comprend une plaque d'attelage (4), sur laquelle sont posés les éléments structurels (2).

17. Procédé selon la revendication 15 ou 16, **caractérisé en ce que** la plaque d'attelage (4) est placée sur son côté prévu dans l'état installé comme côté supérieur (7), et l'élément structurel au moins unique (2) sur le côté prévu dans l'état installé comme côté inférieur (8).

18. Procédé selon l'une des revendications 15 à 17, **caractérisé en ce que** le corps d'attelage (1) et l'élément structurel au moins unique (2) sont placés dans un moule.

19. Procédé selon l'une des revendications 15 à 18, **caractérisé en ce que** l'élément structurel (2) est, en totalité ou en partie, incorporé par moulage dans la masse (3) de matière synthétique.
